(19) Europäisches Patentamt
European Patent Office
Office européen des brevets

(11) **EP 2 261 090 B1**

(12) **EUROPEAN PATENT SPECIFICATION**

(45) Date of publication and mention
of the grant of the patent:
**28.08.2013 Bulletin 2013/35**

(51) Int Cl.:
***B60R 21/0136*** *(2006.01)*

(21) Application number: **09100330.1**

(22) Date of filing: **10.06.2009**

(54) **Method and control device for analyzing a rotary movement of a vehicle**

Verfahren und Steuerungsvorrichtung zur Analyse einer Drehbewegung eines Fahrzeugs

Procédé et dispositif de contrôle pour analyser un mouvement rotatif d'un véhicule

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**15.12.2010 Bulletin 2010/50**

(73) Proprietors:
• **ROBERT BOSCH GMBH**
  **70442 Stuttgart (DE)**
• **Volvo Car Corporation**
  **405 31 Göteborg (SE)**

(72) Inventors:
• **Rauh, Christian**
  **81377, Muenchen (DE)**
• **Becker, Jens**
  **70597, Stuttgart (DE)**
• **Nilsson, Paer**
  **41671, Goeteborg (SE)**
• **Lich, Thomas**
  **71409, Schwaikheim (DE)**
• **Moldenhauer, Maike**
  **71111, Waldenbuch (DE)**
• **Wogel, Anders**
  **42470, Olofstorp (SE)**
• **Doerr, Alfons**
  **70597, Stuttgart (DE)**
• **Axelsson, Anders**
  **42341, Torslanda (SE)**
• **Harda°, Peter**
  **41324, Goeteborg (SE)**
• **Rittler, Stephan**
  **73660, Urbach (DE)**
• **Hiemer, Marcus**
  **88074, Kehlen (DE)**

(56) References cited:
**EP-A- 1 316 481      DE-A1- 10 350 920**
**US-A- 5 513 109      US-A1- 2003 163 226**

EP 2 261 090 B1

**Description**

Prior art

The present invention relates to a method of claim 1, a control device of claim 6 and a computer program product of claim 7.

In a vehicle crash, the activation of restraint means is basically defined by the crash type and the crash severity. Both the crash type and the crash severity to be expected may be evaluated by the combined analysis of signals from acceleration, pitch rate and pressure sensors as well as anticipatory sensors (e.g. radar) integrated in the vehicle. The acceleration sensors serve to evaluate the signal waveform and the speed alterations in the longitudinal and lateral directions. With the help of the roll rate, the further development of a vehicle rollover movement on the longitudinal axis may be evaluated. By means of the pressure sensors, planar crash contacts may be rapidly recognized, and the anticipatory sensors may fundamentally serve to detect the crash speed and the crash overlap.

The evaluation algorithms and also the sensor configuration may be designed and applied on the basis of standardized crash tests. An integral part of these tests is the fact that, generally, a difference is made between front, side and rollover tests, wherein, in general, the total kinetic energy of the vehicle and the crash opponent is converted to deformation energy due to the linear deceleration. In standardized crash tests, the combined observation of linear and rotary alterations of movement has so far been of minor importance for the crash classification, whereas, in the field, the combination of the linear and rotary alterations of movement may frequently be observed during the crash.

DE 103 50 920 A1 relates to means for determining a centre of rotation of a vehicle based on a yaw-rate and a slip angle.

WO 2008/048159 A1 evaluates a vehicle's yaw acceleration in combination with acceleration signals, in order to detect certain crash types

Disclosure of the invention

On this background, the present invention serves to present a method for analyzing a rotary movement of a vehicle, furthermore a control device employing this method as well as finally a respective computer program product according to the independent claims. Advantageous embodiments result from the respective dependent claims and the subsequent description.

The invention is based on the finding that the application of force to the vehicle during the crash may be of substantial influence on the movement of the vehicle occupant and therefore on the optimum activation of various restraint means. This specifically also applies to the case of combined linear and rotary accelerations. Therefore, crash type classification should not be exclusively aimed at linear alterations of movement. Instead, the crash type classification should also be capable of taking in to account the application of force with respect to yaw, pitch and roll movements induced by a crash.

According to the invention, it is not the case that a specific crash type is directly recognized but that a certain behavior of rotatory movement is evaluated in the form of a detection of a centre of rotation. On the basis of the detection of the centre of rotation, certain crash types may then successively be assigned or precluded. Among other things, an off zone side crash may thus be detected indirectly. "Off zone" stands for a crash before the A pillar or behind the C pillar, whereas "in zone" stands for a crash between the A and C pillars.

The invention enables crash type classification by means of a "torque evaluation", in consideration of rotatory and linear alterations of movement occurring during the crash. Depending on the direction of impact, the point of crash, the speed and the masses of the crash opponents, a torque in the yaw, roll and pitch directions may be induced in the crash opponents via a common centre of rotation of the crash opponents. On the basis of the accelerations measured in the vehicle's centre of mass and the rotational accelerations observed, statements on the current centre of rotation may be made, the position and dynamics of which include substantial information on the crash type and the crash development to be expected.

The present invention provides a method for analyzing a rotary movement of a vehicle, comprising: receiving acceleration data via an interface, the acceleration data corresponding to a rotary movement of the vehicle on an actual centre of rotation of the vehicle; and ascertaining a current centre of rotation of the vehicle, based on the acceleration data.

The rotary movement may be a rotation on an arbitrary axis of the vehicle. Therefore, the rotary movement may include a yaw, a pitch and/or roll movement of the vehicle. If the method is executed by a control device, the interface may be an interface of the control device. The acceleration data may represent measured values or may be based on measured values. The measured values may be provided by sensors arranged in the vehicle. The acceleration data is configured to define the vehicle's rotary movement on the vehicle's actual centre of rotation. The actual centre of rotation may deviate from the vehicle's centre of mass and be disposed within or outside the vehicle. The current centre of rotation may be a centre of rotation, which is calculated, estimated or ascertained otherwise under use of the acceleration data and according to an ascertainment specification. The current centre of rotation may correspond to the actual centre of rotation or may be approximated to the actual art centre of rotation. The current centre of rotation may be provided for further processing. For example, based on the current centre of rotation, a current or future movement of the vehicle's centre of mass or a current or future direction of application of force to the vehicle may be determined. The information definable from the centre of rotation may be used for making a decision regarding triggering restraint means of the vehicle.

The vehicle's rotary movement may be based on a crash of the vehicle, and the inventive method may comprise a step of classifying the crash based on the current centre of rotation and a step of providing classification information based on the classification. The crash may be an impact of an object, a body or another vehicle on the vehicle. The classification information may be information on a crash type, a crash location, a crash direction or a crash energy, for example. The classification information may be utilized for triggering or enabling and inhibiting, respectively, vehicle occupant protection means.

The current centre of rotation may be ascertained from a plurality of predefined centers of rotation. For example, for each characteristic crash type, there may be predefined a respective characteristic centre of rotation. The respective information of the predefined centers of rotation, e.g. the coordinates thereof or the distance and direction with respect to a centre of reference thereof, may be stored in a memory of the vehicle. From the predefined centers of rotation, the centre of rotation best satisfying an ascertainment specification may be selected as the current centre of rotation. For example, what may be selected is that predefined centre of rotation, which is closest to the actual centre of rotation, or which, together with the acceleration data, suits best for describing the vehicle's rotary movement on the actual centre of rotation. Thus, the current centre of rotation may be ascertained from the predefined centers of rotation by means of a comparison operation.

According to the invention, the current centre of rotation is determined by means of an equation of movement of the vehicle comprising the acceleration data. Via the equation of movement, the vehicle's rotary movement is defined in general form. It may e.g. be a torque equation defining a relation between rotational acceleration values and linear acceleration values. For ascertaining the current centre of rotation, the acceleration data and the predefined centers of rotation or, respectively, characterizing values of the predefined centers of rotation, are entered in the movement equation. The current centre of rotation may be ascertained by means of an extreme value search such as a minimization.

The current centre of rotation may be ascertained using the mass and the inertia tensor of the vehicle. Thereby, accuracy in ascertaining the current centre of rotation may be improved.

The acceleration data may comprise information on a linear acceleration and on a rotational acceleration of the vehicle. Such information may e.g. be detected and provided by means of acceleration sensors arranged in the vehicle

The acceleration data may relate to a predefined centre of reference of the vehicle. The centre of reference may be the vehicle's centre of mass. If the current centre of rotation is determined from the predefined centers of rotation, a distance between the predefined centre of reference and the predefined centers of rotation may be known and used for ascertaining the current centre of rotation.

According to an embodiment, the inventive method may comprise a step of checking the current centre of rotation based on a plurality of check centers of rotation, which are disposed in a predefined environment of the current centre of rotation. For example, the check centers of rotation may exhibit a predefined distance to the current centre of rotation. By means of the check centers of rotation, the position of the current centre of rotation may be verified. The verification may be effected by means of checking the check centers of rotation corresponding to the predefined centers of rotation. In case a specific check center of rotation may turn out to be more suitable than the current centre of rotation, the specific check center of rotation may be used as a current centre of rotation.

The present invention further provides a control device configured to perform or implement the steps of the inventive method. This embodiment of the invention in the form of a control device also serves to achieve the object underlying the invention in a fast and efficient manner.

At hand, a control device may be an electric device, which processes sensor signals and, in dependence thereon, outputs control signals. The control device may comprise an interface, which may be configured in hardware and/or in software. In the case of a configuration in hardware, these interfaces may, for example, be part of a so-called system ASIC, which comprises diverse functions of the control device. However, it is also possible that the interfaces be individual, integrated circuits or at least partially consist of discrete components. In the case of a configuration in software, the interfaces may be software modules, which may be provided on a microcontroller next to other software modules, for example.

What is also advantageous is a computer program product with a program code stored on a machine-readable carrier such as a semiconductor memory, a hard disk or an optical memory and utilized for performing the method of any one of the aforementioned embodiments, when the program for is executed on a control device.

In the following, the invention is exemplarily explained in detail by means of the accompanying drawings.

Fig. 1            shows a block diagram of a sensor configuration in a vehicle;

Fig. 2        shows a flow chart of the inventive method according to an em- bodiment of the present invention; and

Figs. 3a to 3d     show illustrations regarding the determination of the centre of ro- tation, according to an embodiment of the present invention.

In the Figs. below, like or similar elements may be provided with like or similar reference numbers, with a repeated description being dispensed with. In addition, the figures of the drawings, the description thereof as well as the claims include numerous features in combination. A person skilled in the art clearly understands that these features may also be regarded individually or that they may be combined to form further combinations that are not explicitly described herein. Furthermore, the invention may in the following description be discussed using different measures and dimensions, whereby stating these measures and dimensions is not to be understood such that the invention is to be understood as limited to these measures and dimensions.

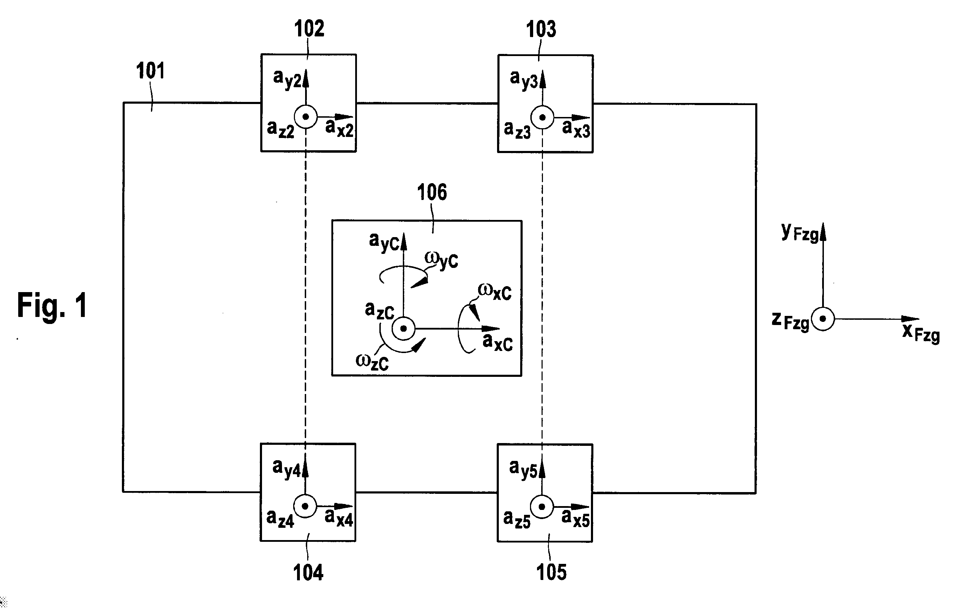

Fig. 1 shows a schematic representation of a vehicle 101 in top view. The vehicle 101 comprises, besides a plurality of distributed sensors 102, 103, 104, 105, a central control unit 106, which may be located in the vehicle's centre of mass or near the vehicle's centre of mass.

The central control unit 106 may comprise, among other things, linear acceleration sensors in the x direction so as to provide a measuring signal $a_{xC}$, in the y direction so as to provide a measuring signal $a_{yC}$ and in the z direction so as to provide a measuring signal $a_{zC}$. In addition, the central control unit 106 may comprise rotation rate sensors for measuring the rotation rate on the z axis, so as to provide a measuring signal "yaw rate $\omega_{zC}$", for measuring the rotation rate on the y axis, so as to provide a measuring signal "pitch rate $\omega_{yC}$", and for measuring the rotation rate on the x axis, so as to provide a measuring signal "roll rate $\omega_{xC}$". Without thereby limiting the inventive function, the rotation rate signals may also be detected in other locations in the vehicle. In this case, the signals detected may, if necessary, be mapped to the vehicle's centre of mass or another centre of reference.

In addition, the control unit 106 may comprise, instead of three linear acceleration sensors, only two linear acceleration sensors are only one linear acceleration sensor. Furthermore, the control unit 106 may comprise, instead of the rotation rate sensors, only two rotation rate sensors or only one rotation rate sensor.

Next to the central unit 106, the vehicle 101 comprises the four distributed sensors 102, 103,104,105.

There may, however, be more or less distributed sensors 102, 103, 104, 105. The sensors 102, 103, 104, 105 may be arranged in a plane in parallel to the x-y plane but may also be mounted at different heights relative to the road surface.

Each of the four distributed sensors 102, 103, 104, 105 may comprise three measuring channels for e.g. acceleration signals $a_{ij}$ with e.g. i={x, y, z} and e.g. j={2, 3, 4, 5}. Here, x may correspond to the x direction along the vehicle's longitudinal axis, y may correspond to the y direction along the vehicle's cross axis and z may correspond to the z direction along the vehicle's vertical axis. It is, however, also possible that, instead of the three channels, there are only two channels, e.g. in the x and y directions, or in the x and z directions or in the y and z directions. What is also conceivable is that only one channel is contained in the distributed sensors 102, 103, 104, 105, e.g. in the x direction only, in the y direction only or the z direction only. Furthermore, arbitrary combinations of sensor channels across the distributed sensors 102, 103, 104, 105 are conceivable, for example sensor element 102 in the x direction only, sensor element 103 in the y direction only, sensor element 104 with only two channels, e.g. in the y and z directions, and sensor element 105 with three channels, e.g. in the x, y and z directions.

Arbitrary combinations of linear acceleration sensors and rotation rate sensors are possible, such as e.g. two linear acceleration sensors in the x and y directions as well as two rotation rate sensors on the z axis.

Generally speaking, the forces acting on the centre of mass may be determined via the acceleration sensors arranged in the vehicle's centre of mass. With respect to an arbitrary centre of rotation, which is located outside the vehicle's centre of mass in a vehicle crash, these acceleration values may be assigned a torque. The torque acting relative to the centre of rotation selected may be verified from the rotational accelerations measured in the vehicle. The allocation of the crash type may be concretized by an independent evaluation of distributed sensors with respect to a crash contact point and an overall movement of the vehicle.

The inventive approach differs from those approaches, in which recognition of discrete crash scenarios is effected based on the separate evaluation of rotatory and linear acceleration information. Instead, a universal feature of complex crash courses comprising both linear and rotatory alterations of movement is determined. The feature may be defined by an analysis of longitudinal, lateral and/or vertical acceleration information combined with yaw, roll and pitch rate information. Here, apart from the mass, the inertia tensor $J_{ij}$ of the vehicle is also taken into account. From the position of the centre of rotation, conclusions may be drawn regarding the movement of the centre of mass of the crash opponents, regarding the point of crash and regarding the application of force to the vehicle that is to be expected. If the force is applied directly to the passenger cell, a higher severity of injuries is to be expected in the course of the crash than is the case when the application of force is effected past the passenger cell. In the latter case, the activation strategy for the triggering of restraint means should be adjusted.

According to an embodiment of the inventive method of analyzing a rotary movement of a vehicle, first acceleration data of the vehicle is received. The acceleration data may be measured values provided by the sensors shown in Fig. 1. Specifically, the acceleration data may comprise acceleration information on at least one linear and at least one rotational acceleration. The acceleration information may relate to and/or be mapped to a common centre of reference, e.g. the centre of mass. By means of the acceleration data, a rotary movement of the vehicle on an actual centre of rotation of the vehicle may be detected and/or evaluated. Furthermore, the acceleration data may be used for ascertaining a current centre of rotation of the vehicle either directly or under use of predefined centers of rotation. The current centre of rotation may in turn be used for classifying the rotary movement of the vehicle.

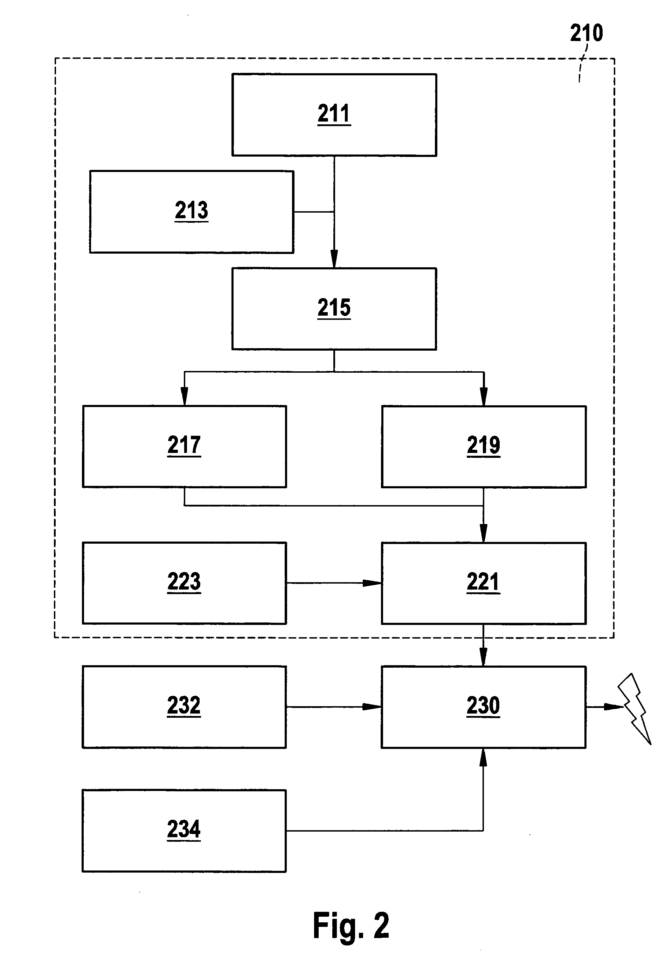

Fig. 2 shows a flow chart of the inventive method of analyzing a rotary movement of a vehicle, according to a further embodiment of the present invention.

According to this embodiment, the inventive method includes a torque analysis 210. Here, in a step 211, a defined quantity of crash-type-specific centers of rotation are provided in vehicle coordinates, and in a step 213, sensor signals, e.g. ECU-AccX, -Y, -Z, ArX, -Y, -Z are provided. From the crash-type-specific centers of rotation and the sensor signals, a determination 215 of possible crash centers of rotation may be effected by means of a torque equation. Based on the possible crash centers of rotation, a verification 217 of the possible crash centers of rotation may be effected via checkpoints. Furthermore, a preclusion 219 of individual crash centers of rotation may be effected based on the crash centers of rotation.

In a next step, a selection 221 of possible crash types may be effected. Examples of possible crash types are car2car, low overlap, off zone, front angled or front pole offset. This also presents a chance of a differentiation between an "off zone" crash and an "in zone" crash. In the selection 221 of possible crash types, an analysis 223 of the signals of distributed sensors may be taken into account. In this step, also a check may be made, whether a signal amplitude and a signal timing fit the selected crash type.

In a step following the torque analysis 210, a fusion 230 of all information relating to the crash type and the crash severity may be effected. Here, a physical fire request for defined restraint means may be generated, for example. Apart from the selection of possible crash types defined in step 221, information regarding a situation classification 232 in the direct run-up of the crash, as well as a generic fire request 234 due to critical passenger movement may be taken into account.

According to the invention, fire requests for individual restraint means may be generated at certain points in time. For a decision regarding a fire request, a plurality of pieces of information may be combined. On the one hand, the generic fire decision 234 may be used for the decision on the fire request as a result of a critical passenger movement. The critical passenger movement may be a movement with respect to the forces acting in the vehicle, the sitting position or the belt status. The generic fire decision 234 may be covered by known trigger algorithms and sensor configurations, which may be integrated and calibrated by means of known crash hall tests. Furthermore, information from the situation classification 232 from the direct run-up of a generic fire decision (runoffroad, uncontrolled driving, emergency braking), may be employed in deciding on the fire request. This information may be covered by e.g. driving dynamics observers, driver observation, (braking behavior, steering behavior), an anticipatory sensor system (radar, LIDAR, ultrasound, video) or else a general dynamics analysis (misuse classification in the airbag control device). Furthermore, information on the selection 221 and/or the preclusion 219 of possible crash types, which is made based on the torque analysis 210 and the signal analysis 223 of distributed sensors in the vehicle, may be drawn upon for deciding on the fire request. This information may be covered by the torque analysis 210.

In the torque analysis 210, a crash data analysis serves to identify crash types that ought to be recognized with sufficient accuracy regarding the restraint means available and vehicle specific peril points. To these crash types, characteristic centers of rotation 211 may be allocated, which may be stored in the airbag control device.

By means of the acceleration sensors integrated in the vehicle, a linear application of force to the vehicle may be detected. Depending on the location of the application of force and/or an interlocking at the location of the application of force, a torque is induced in the vehicle. The torque acting may be detected by the rotation rate sensors. The physical connection between the linear application of force measured and the torque measured is given by a centre of rotation. As, depending on the sensor configuration, the signal resolution and the course of the crash, the centre of rotation may be unambiguously determined from the sensor data, possible centers of rotation 211 with respect to the sensor data 213 measured may be checked in a simplified manner. The centers of rotation 215 favored may then be verified 217 or precluded 219 via further checkpoints in the direct environment of the centre of rotation favored.

With respect to the centre of rotation estimated, sensor data 223 of sensors distributed in the vehicle may be drawn on for verifying the centre of rotation and the crash type derived therefrom. Depending on the placement of the sensor, the centre of rotation and the crash contact point, the distributed acceleration sensors will supply characteristic signals with respect to the amplitude as well as the timing to the signal-processing system. Acceleration sensors near the crash contact point will supply substantially higher and earlier acceleration values in the orientations available then sensors remote from the crash contact point.

In summary, Fig. 2 shows a flow chart of the torque analysis 210, which may, in combination with other classification methods 230, 232, 234, in the end result in a trigger decision for various safety systems. The timing for the trigger decision may primarily be effected via the generic fire decision, 234. The torque analysis 210 may control the enabling of the fire requests and also may itself exert influence on the logic for the generic fire requests.

In the following, the torque analysis is described in detail according to an embodiment of the present invention.

According to this embodiment, the equation of movement for the rotary movement of a vehicle is given by the following equations.

$$J_x \cdot \dot{\omega}_x = -m \cdot \left( y \cdot a_z - z \cdot a_y \right)$$

$$J_y \cdot \dot{\omega}_y = -m \cdot \left( z \cdot a_x - x \cdot a_z \right)$$

$$J_z \cdot \dot{\omega}_z = -m \cdot \left( x \cdot a_y - y \cdot a_x \right)$$

As shown in Fig. 1, the coordinates are selected in correspondence with the right hand rule. The origin is in the vehicle's centre of mass, the x axis runs in the direction of the vehicle's longitudinal axis and the direction of travel. $J_i$ are the moments of inertia, and $\omega_i$ are the rotational accelerations on the main axes of inertia with respects to the current centre of rotation. $a_i$ stand for the acceleration values measured in the vehicle's centre of mass in the direction of the main axes of inertia, and (x, y, z) designate the distances between the vehicle's current centre of rotation and its centre of mass.

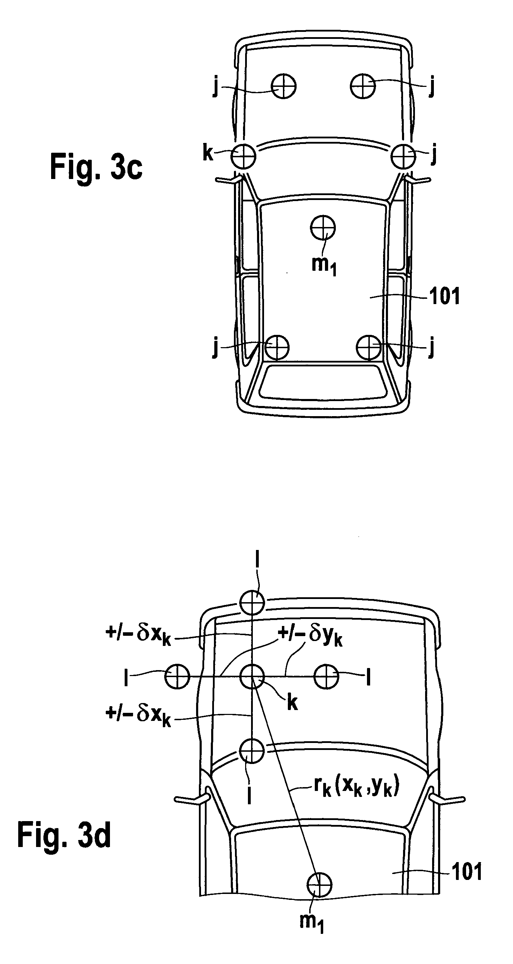

According to the invention, for the crash classification, in a first step, characteristic centers of rotation k for the crash types to be differentiated are defined in vehicle coordinates, with the vehicle's centre of mass serving as the origin. Also, for each centre of rotation k, a finite number of checkpoints l may be defined at distances $\pm 6x_k$, $\pm \delta y_k$, $\pm \delta z_k$, as it is shown in Fig. 3d.

By means of the linear acceleration values and rotational acceleration values measured over a given period of time, possible centers of rotation may be specified and other centers of rotation may be precluded by the use of the above equation of movement. Here, the centers of rotation may be verified by means of the checkpoints.

The precise proceeding, for example for defining yaw centers of rotation in the vehicle plane, may be embodied as follows. Additional centers of rotation may be determined correspondingly.

The definition of the centre of rotation k shown in Fig. 3c by means of the torque analysis may be effected via a squared minimization of all predefined, characteristic centers of rotation j.

$$\left| m \cdot \left( x_k \cdot a_y - y_k \cdot a_x \right) - J_{z,k} \cdot \dot{\omega}_z \right|^2$$
$$= \min \left( j \in \{1, \ldots n\}, \left| m \cdot \left( x_j \cdot a_y - y_j \cdot a_x \right) - J_{z,j} \cdot \dot{\omega}_z \right|^2 \right)$$

The verification of the defined centre of rotation may be effected via a minimization in the range of four checkpoints at the distances $\pm \delta x_k$, $\pm \delta y_k$:

$$\left| m \cdot \left( x_k \cdot a_y - y_k \cdot a_x \right) - J_{z,k} \cdot \dot{\omega}_z \right|^2$$
$$= \min \left( n, m \in \{-1, 1\}, \left| m \cdot \left( (x_k + n \cdot \delta x) \cdot a_y - (y_k + m \cdot \delta y) \cdot a_x \right) - J_{z,k} \cdot \dot{\omega}_z \right|^2 \right)$$

The current centre of rotation determined from the analysis may be utilized in trigger algorithms for e.g. characteristic path decisions, i.e. for activating or deactivating certain trigger paths.

From analyzing the current direction of the application of force towards the centre of mass compared to the direction of the current centre of rotation, further statements regarding the classification of the crash type may be made. Here, an analysis of the acceleration values in the vehicle's centre of mass results in a total acceleration vector defining the direction of the application of force to the vehicle's centre of mass during the crash.

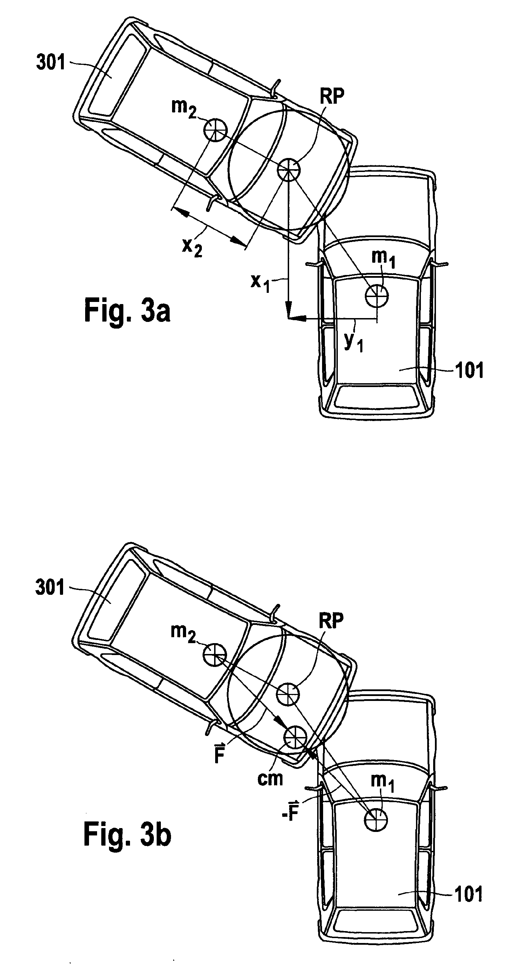

Figs. 3a to 3d show illustrations regarding the determination of the centre of rotation, according to an embodiment of the present invention.

Fig. 3a shows a car to car crash of the vehicle 101 and another vehicle 301 with a common centre of rotation RP of the crash partners 101, 301. The centre of mass of the vehicle 101 is identified by $m_1$, and the centre of mass of the other vehicle 301 is identified by $m_2$. The distance of the common centre of rotation RP from the centre of mass $m_1$ of the vehicle 101 is given by the distances $x_1$, $y_1$. The distance of the common centre of rotation RP from the centre of mass $m_2$ of the other vehicle 301 is given by the distance $x_2$.

The respective torque acting on the individual crash partners 101, 301 is calculated from the mass and the moment of inertia of the respective crash partner, from the acceleration values in the direction of the main axes of inertia measured in the centre of mass and from the distance $x_1$, $y_1$, $x_2$ of the current crash centre of rotation RP to the vehicles' respective centers of mass $m_1$, $m_2$.

Fig. 3b shows the car to car crash of the vehicles 101, 301 with a common centre of mass cm of the two crash partners 101, 301 in relation to the common centre of rotation RP. In addition, a force $\overline{F}$ in the direction of the common centre of mass cm and originating in the centre of mass $m_2$ as well as a force $-\overline{F}$ in the direction of the common centre of mass cm and originating from the centre of mass $m_1$ are shown. The total rotation of the vehicles 101, 301 is added up from a universal rotation on the common centre of mass cm and the rotations of the vehicles 101, 301 relative to each other on the common centre of rotation RP.

Fig. 3c shows, by means of the vehicle 101, an estimation of the current crash centre of rotation k for the crash type recognition. The estimation may be effected by means of checking a finite number of centers of rotation j relevant for the crash type recognition. The centers of rotation j may be disposed at different positions of the vehicle.

Fig. 3d shows, by means of the vehicle 101, a verification of a found crash centre of rotation k for the crash type recognition. The verification may be effected via checkpoints l, which may be disposed at distances $\pm\delta x_k$, $\pm\delta y_k$, $\pm\delta z_k$ from the centre of rotation k. In addition, a rotation radius $r_k(x_k, y_k)$ of the vehicle's 101 centre of mass $m_1$ on the found crash centre of rotation k is shown.

The inventive approach may be employed in control device embodiments, in which both rotation rate sensors and acceleration sensors are integrated in the respective rotation plane. By means of the torque analysis illustrated, the determination of a concrete crash feature for the determination of a suitable activation concept for restraint means in correspondingly complex crash situations is provided for. Thus, the crash classification of rotatory crashes is made possible.

The inventive approach may be implemented in rotation-rate-aided algorithms. The inventive method may also be employed for enabling paths in the rollover classification and for yaw-rate-based algorithms.

The embodiments described are only exemplary and may be combined with one another. Instead of the coordinate system described and the equations of movement described, other appropriate coordinate systems and equation systems may also be used. The method steps shown may be executed repeatedly or in an order other than described.

## Claims

1.  Method for analyzing a rotary movement of a vehicle (101), comprising:

    receiving (213) acceleration data via an interface, the acceleration data corresponding to a rotary movement of the vehicle on an actual centre of rotation (RP) of the vehicle and the acceleration data comprising information on a linear acceleration and on a rotational acceleration of the vehicle; and
    ascertaining (215) a current centre of rotation (k) of the vehicle, from a plurality of predefined centers of rotation (j) based on the acceleration data by means of an equation of movement of the vehicle (101) comprising the acceleration data, wherein for ascertaining the current centre of rotation, the acceleration data and the predefined centers of rotation or, respectively, characterizing values of the predefined centers of rotation, are entered in the equation of movement.

2.  Method of claim 1, in which the rotary movement of the vehicle (101) is based on a crash of the vehicle, and with a step of classifying (221) the crash based on the current centre of rotation (k) and a step of providing classification information based on the classification.

3.  Method of any one of the preceding claims, in which the current centre of rotation (k) is ascertained using the mass and the inertia tensor of the vehicle.

4.  Method of any one of the preceding claims, in which the acceleration data relates to a predefined centre of reference ($m_1$) of the vehicle.

5.  Method of any one of the preceding claims, with a step of checking the current centre of rotation (k) based on a plurality of check centers of rotation (l), which are disposed in a predefined environment of the current centre of rotation.

6. Control device, configured to perform the steps of a method of any one of claims 1 to 5 and comprising at least one interface for receiving acceleration data, the acceleration data corresponding to a rotary movement of the vehicle on an actual centre of rotation (RP) of the vehicle and the acceleration data comprising information on a linear acceleration and on a rotational acceleration of the vehicle; and at least on ASIC and/or integrated circuit and/or discrete components for ascertaining a current centre of rotation (k) of the vehicle, from a plurality of predefined centers of rotation (j) based on the acceleration data by means of an equation of movement of the vehicle (101) comprising the acceleration data, wherein for ascertaining the current centre of rotation, the acceleration data and the predefined centers of rotation or, respectively, characterizing values of the predefined centers of rotation, are entered in the equation of movement.

7. Computer program product with a program code stored on a machine-readable carrier, for performing the method of any one of claims 1 to 5, when the program is executed on a control device.

**Patentansprüche**

1. Verfahren zum Analysieren einer Drehbewegung eines Fahrzeugs (101), das Folgendes umfasst:

Empfangen (213) von Beschleunigungsdaten über eine Schnittstelle, wobei die Beschleunigungsdaten einer Drehbewegung des Fahrzeugs um ein jeweiliges Drehzentrum (RP) des Fahrzeugs entsprechen und wobei die Beschleunigungsdaten Informationen über eine geradlinige Beschleunigung und über eine Drehbeschleunigung des Fahrzeugs umfassen; und

Bestimmen (215) eines jeweiligen Drehzentrums (k) des Fahrzeugs aus mehreren im Voraus definierten Drehzentren (j) auf der Basis der Beschleunigungsdaten mittels einer Bewegungsgleichung des Fahrzeugs (101), die die Beschleunigungsdaten umfasst, wobei zum Bestimmen des jeweiligen Drehzentrums die Beschleunigungsdaten und die im Voraus definierten Drehzentren oder die jeweiligen charakteristischen Werte der im Voraus definierten Drehzentren in die Bewegungsgleichung eingegeben werden.

2. Verfahren nach Anspruch 1, wobei die Drehbewegung des Fahrzeugs (101) auf einem Zusammenstoß des Fahrzeugs basiert, und umfassend einen Schritt des Klassifizierens (221) des Zusammenstoßes auf der Basis des jeweiligen Drehzentrums (k) und einen Schritt des Bereitstellens der Klassifikationsinformationen auf der Basis der Klassifikation.

3. Verfahren nach einem der vorhergehenden Ansprüche, wobei das jeweilige Drehzentrum (k) unter Verwendung der Masse und des Trägheitstensors des Fahrzeugs bestimmt wird.

4. Verfahren nach einem der vorhergehenden Ansprüche, wobei sich die Beschleunigungsdaten auf ein im Voraus definiertes Drehreferenzzentrum ($m_1$) des Fahrzeugs beziehen.

5. Verfahren nach einem der vorhergehenden Ansprüche mit einem Schritt des Prüfens des jeweiligen Drehzentrums (k) auf der Basis mehrerer Prüfdrehzentren (1), die in einer im Voraus definierten Umgebung des jeweiligen Drehzentrums angeordnet sind.

6. Steuervorrichtung, die konfiguriert ist, die Schritte eines Verfahrens nach einem der Ansprüche 1 bis 5 durchzuführen, und die Folgendes umfasst:

mindestens eine Schnittstelle, um Beschleunigungsdaten zu empfangen, wobei die Beschleunigungsdaten einer Drehbewegung des Fahrzeugs um ein jeweiliges Drehzentrum (RP) des Fahrzeugs entsprechen und wobei die Beschleunigungsdaten Informationen über eine geradlinige Beschleunigung und über eine Drehbeschleunigung des Fahrzeugs umfassen; und

mindestens eine ASIC und/oder eine integrierte Schaltung und/oder diskrete Komponenten, um aus mehreren im Voraus definierten Drehzentren (j) auf der Basis der Beschleunigungsdaten mittels einer Bewegungsgleichung des Fahrzeugs (101), die die Beschleunigungsdaten umfasst, ein jeweiliges Drehzentrum (k) des Fahrzeugs zu bestimmen, wobei zum Bestimmen des jeweiligen Drehzentrums die Beschleunigungsdaten und die im Voraus definierten Drehzentren oder die jeweiligen charakteristischen Werte der im Voraus definierten Drehzentren in die Bewegungsgleichung eingegeben werden.

7. Computerprogrammprodukt mit einem Programmcode, der auf einem maschinenlesbaren Träger gespeichert ist, um das Verfahren nach einem der Ansprüche 1 bis 5 durchzuführen, wenn das Programm in einer Steuervorrichtung ausgeführt wird.

**Revendications**

1. Procédé pour analyser un mouvement rotatif d'un véhicule (101), comprenant :

   la réception (213) de données d'accélération par l'intermédiaire d'une interface, ces données d'accélération correspondant à un mouvement rotatif du véhicule sur un centre de rotation réel (RP) du véhicule et ces données d'accélération comprenant des informations sur une accélération linéaire et sur une accélération rotationnelle du véhicule ; et
   la détermination (215) d'un centre de rotation courant (k) du véhicule, à partir d'une pluralité de centres de rotation prédéfinis (j), en se basant sur les données d'accélération au moyen d'une équation de mouvement du véhicule (101) comprenant les données d'accélération, dans lequel, pour déterminer le centre de rotation courant, les données d'accélération et les centres de rotation prédéfinis ou, respectivement, des valeurs caractérisant les centres de rotation prédéfinis, sont entrés dans l'équation de mouvement.

2. Procédé selon la revendication 1, dans lequel le mouvement rotatif du véhicule (101) est basé sur une collision du véhicule, et avec une étape de classification (221) de la collision basée sur le centre de rotation courant (k) et une étape de fourniture d'informations de classification basées sur la classification.

3. Procédé selon l'une quelconque des revendications précédentes, dans lequel le centre de rotation courant (k) est déterminé en utilisant la masse et le tenseur d'inertie du véhicule.

4. Procédé selon l'une quelconque des revendications précédentes, dans lequel les données d'accélération se rapportent à un centre de référence prédéfini ($m_1$) du véhicule.

5. Procédé selon l'une quelconque des revendications précédentes, avec une étape de vérification du centre de rotation courant (k) basée sur une pluralité de centres de rotation de contrôle (1), qui sont disposés dans un environnement prédéfini du centre de rotation courant.

6. Dispositif de commande, configuré de façon à effectuer les étapes d'un procédé selon l'une quelconque des revendications 1 à 5 et
   comprenant au moins une interface pour recevoir des données d'accélération, ces données d'accélération correspondant à un mouvement rotatif du véhicule sur un centre de rotation réel (RP) du véhicule et ces données d'accélération comprenant des informations sur une accélération linéaire et sur une accélération rotationnelle du véhicule ; et
   au moins un ASIC et/ou un circuit intégré et/ou des composants discrets pour déterminer un centre de rotation courant (k) du véhicule, à partir d'une pluralité de centres prédéfinis de rotation (j), en se basant sur les données d'accélération au moyen d'une équation de mouvement du véhicule (101) comprenant les données d'accélération, dans lequel, pour déterminer le centre de rotation courant, les données d'accélération et les centres de rotation prédéfinis ou, respectivement, des valeurs caractérisant les centres de rotation prédéfinis, sont entrés dans l'équation de mouvement.

7. Produit programme d'ordinateur avec un code de programme stocké sur un support lisible par machine, pour effectuer le procédé selon l'une quelconque des revendications 1 à 5, lorsque que le programme est exécuté sur un dispositif de commande.

**Fig. 1**

EP 2 261 090 B1

210

211

213

215

217

219

223

221

232

230

234

**Fig. 2**

Fig. 3a

Fig. 3b

**Fig. 3c**

j    j
k    j
$m_1$
101
j    j

**Fig. 3d**

l
$+/- \delta x_k$    $+/- \delta y_k$
l    l
k
$+/- \delta x_k$
l
$r_k(x_k, y_k)$
101
$m_1$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10350920 A1
- WO 2008048159 A1